**Europäisches Patentamt**

**European Patent Office**

**Office européen des brevets**

(11) Veröffentlichungsnummer: **0 510 478 A1**

# EUROPÄISCHE PATENTANMELDUNG

(21) Anmeldenummer: **92106349.1**

(22) Anmeldetag: **13.04.92**

(51) Int. Cl.5: **C08F 218/08**, C08F 2/00

(30) Priorität: **24.04.91 DE 4113291**

(43) Veröffentlichungstag der Anmeldung:
**28.10.92 Patentblatt 92/44**

(84) Benannte Vertragsstaaten:
**DE FR GB IT**

(71) Anmelder: **BAYER AG**

**W-5090 Leverkusen 1 Bayerwerk(DE)**

(72) Erfinder: **Rhiel, Franz Ferdinand, Dr.**
**Pfauenstrasse 26**
**W-4047 Dormagen 1(DE)**
Erfinder: **Fischer, Helmut, Dipl.-Ing.**
**Hitdorfer Strasse 271**
**W-5090 Leverkusen 1(DE)**
Erfinder: **Weymans, Günther, Dr.**
**Körnerstrasse 5**
**W-5090 Leverkusen 1(DE)**
Erfinder: **Kuhlmann, Dieter, Dr.**
**Föhrenweg 5**
**W-5024 Pulheim(DE)**
Erfinder: **Asch, Erhard, Dr.**
**Jakob-Böhme-Strasse 15**
**W-5000 Köln 80(DE)**
Erfinder: **Plümmer, Rudolf, Dipl.-Ing.**
**An den Peschen 10**
**W-4047 Dormagen 1(DE)**

(54) **Herstellung von Ethylen-Vinylacetat-Copolymeren.**

(57) Die vorliegende Erfindung betrifft ein Verfahren zur Herstellung von Polymeren, bevorzugt Ethylen-Vinylacetat-Copolymeren, in Reaktoren mit einem speziellen Regelsystem. Nach dem erfindungsgemäßen Verfahren können Polymere gleichmäßiger Qualität und stippenfrei produziert werden.

EP 0 510 478 A1

Die Erfindung geht aus von einem Verfahren zur quasi kontinuierlichen Herstellung von Polymeren, insbesondere Ethylen-Vinylacetat-Copolymerisaten mit Vinylacetatgehalten von 20 % bis 98 Gew.-% in tertiärem Butanol bei Temperaturen zwischen 30°C und 150°C und Drücken von 100 bar bis 1000 bar, bei dem die Einsatzstoffe kontinuierlich in einen Reaktor oder eine Reaktorkaskade dosiert werden und das entstandene Polymer intermittierend aus einem nachgeschalteten Entspannungsbehälter ausgetragen wird, wobei sich die durch die Austragung verursachten Druckänderungen in den Reaktor bzw. die Reaktorkaskade fortpflanzen.

Bei der Herstellung von Polymeren nach exothermen Reaktionen bei höheren Drücken und Temperaturen und bei langen Reaktionszeiten wird in vielen Fällen eine Kaskade von 2 bis 7 Autoklaven verwendet, in denen die Polymerisation stattfindet Die Produktqualität hängt in starkem Maße davon ab, mit welchen Temperaturen die in Reihe geschalteten Autoklaven während der Polymerisation gefahren werden. Eine einwandfreie Temperaturführung in den Autoklaven ist für eine konstante Qualität auf hohem Niveau entscheidend. Es hat bisher nicht an Versuchen gefehlt, diese Qualitätsbedingungen einzuhalten.

Zum einen wurde versucht, durch spezielle chemische Reaktionen die durch das Herstellverfahren bedingten Druck- bzw. Temperaturschwankungen zu kompensieren bzw. das Produkt während des Reaktionsablaufes gegen solche Schwankungen unempfindlich zu machen. So beschreibt beispielsweise die DE-1 126 613 für Ethylen-Vinylacetat-Copolymere ein Verfahren zur Herstellung dieser Mischpolymerisate, die in homogener Flüssigkeitsphase hergestellt werden unter speziellen Einsatzverhältnissen von tert.-Butanol und Monomeren.

Gemäß DE-3 815 946 werden diese Copolymerisate verbessert (gelfrei) hergestellt, indem spezielle Druck-Temperatur-Mindestwerte im vorzugsweise gesamten Polymerisationsverlauf eingehalten werden.

Gemäß DE-3 731 054 werden solche Copolymerisate hergestellt, indem durch Einsatz spezieller Polymerisationsinitiatoren und Polymerisationstemperaturen die Reaktion vorzugsweise im ersten Teil der Autoklavenkaskade abläuft.

Generell betrifft das Problem der konstanten geregelten Reaktionsführung bei der Herstellung von Polymeren alle Polymerisations-, Polykondensations- und Polyadditionsverfahren, in denen verfahrensbedingte Druck- bzw. Temperaturschwankungen und Druck- bzw. Temperaturstörungen die Konstanz der Qualität des Polymeren beeinflussen.

Dies sind beispielsweise Polymerisationen von Vinylchlorid in Emulsionen (DE-3 627 287), die Herstellung von Polycarbonaten nach dem Zweiphasengrenzflächenverfahren bei höheren Drücken und Temperaturen (Phosgendruck über 5 bar, Temperaturen oberhalb 50°C), die im Prinzip bekannten Herstellverfahren der Polymere aus der Klasse der Polybutadiene, Polyolefine, Polystyrole, Polyhaloolefine, Polyvinyle, Polyether, Polyacrylate, Polyalkylmethacrylate, Polydiene, Polyester, Polyestercarbonate, Polyamide, Polyarylene wie zum Beispiel Polyarylensulfide, Polyarylenketone, Polyarylensulfone. Weitere Polymere, bei denen Herstellverfahren mit höheren Temperaturen und Drücken bekannt sind, sind Polyketone, Polysulfone, Polyimide, Polyetherester und Polysiloxane.

Es hat nicht an Versuchen gefehlt, durch konventionelle Regelung des Prozesses die Temperatur- und Druckschwankungen zu kompensieren. Konventionelle Regelkonzepte haben aber generell den Nachteil, daß sie den Prozeßtrend zu spät erkennen und damit nicht mehr den rechtzeitigen Eingriff in den Herstellprozeß durch Stellgrößen ermöglichen.

In der DE-3 627 287 wird daher ein Verfahren beschrieben, in welchem speziell für die kontinuierliche Herstellung von Polyvinylchlorid die Reaktorinnentemperatur durch die Kühlwassermenge und die Zulaufmenge an Aktivatorlösung durch die Kühlwasserrücklauftemperatur geregelt wird, wobei dadurch die Polymerisationstemperatur auf einem festgelegten Wert konstant gehalten wird und der Polymerisationsdruck stets unterhalb des Sättigungsdruckes des Vinylchlorids liegt und durch Feinregulierung der Zulaufmenge an flüssigem Vinylchlorid variiert wird.

Bevorzugt ist diese Art der Regelung geeignet, wenn der Druck im Polymerisationskessel automatisch durch Veränderung der Zufuhr der Menge des Vinylchlorids und/oder des Aktivators gesteuert wird. Dies hat allerdings besonders für Reaktorkaskaden und dort insbesondere für Mischpolymerisate den Nachteil, daß die chemische Zusammensetzung des Produktes durch Änderung der Dosierung geändert werden kann, die Polymere inhomogene Molmassenverteilungen erhalten können und der Durchsatz der Anlage je nach aktuellen Betriebsbedingungen nicht immer optimal gewählt werden kann.

Weitere Gründe für Druckabsenkungen in solchen Autoklavreaktionen können sein: Entleerung des letzten Reaktors der Kaskade in einem Entspannungsbehälter durch ein Entspannungssystem, das zu automatisch intermittierenden Druckabsenkungen führt, Handentspannungen zum Freispülen der Leitungen. Außerdem entstehen Temperaturschwankungen durch Temperaturspitzen infolge von Polymeragglomeraten.

Aus Sicherheitsgründen kommt es bisher auch häufig vor, daß manuelle Druckabsenkungen im Prozeßverlauf notwendig sind, um überschüssige Reaktionswärmen in Form von Verdampfungsenthalpien abzuführen.

Diese Schwankungen haben bisher dazu geführt, daß nach dem Stand der Technik hergestellte Polymere in solchen Autoklav-Kaskaden irreversible Mikrogele bildeten und damit die Eigenschaften der Polymere ungünstig beeinflußt wurden.

Maßnahmen der Prozeßführung von Polymerherstellverfahren bei höheren Drücken und Temperaturen, die diesen Nachteil bisheriger Fahrweisen beheben, sind noch nicht bekannt. Eine verbesserte Prozeßführung muß Möglichkeiten schaffen, ohne Änderung der Dosierung der Zulaufmengen Änderungen der Reaktion so frühzeitig zu erkennen, daß rechtzeitig über die Kühlwassertemperatur und/oder Kühlwassermenge in den Prozeß eingegriffen werden kann und damit ein Überschreiten vorgegebener Temperaturgrenzen und insbesondere eine sonst evtl. notwendige (manuelle) Druckentspannung aus Sicherheitsgründen vermieden werden.

Ausgehend von einem Verfahren zur Herstellung von Polymeren, bei dem die Einsatzstoffe kontinuierlich in einen Reaktor oder eine Reaktorkaskade dosiert werden und das entstandene Polymer taktweise intermittierend aus einem nachgeschalteten Entspannungsbehälter ausgetragen wird, wobei sich die durch die Austragung verursachten Druckänderungen in den Reaktor bzw. die Reaktorkaskade fortpflanzen, wurde ein spezielles Prozeß-Regelverfahren entwickelt, bei dem erfindungsgemäß die Temperatur in dem Reaktor bzw. in der Reaktorkaskade durch folgenden Algorithmus konstant gehalten wird:

a) Einführung einer druckkompensierten Temperatur T* unter Berücksichtigung der aktuellen anlagenbedingten Druckänderungen gemäß der Vorschrift

(i)    $T^*(t) = T(t) - b \, (p(t) - p(t)^*) + {}_\Delta T$

gültig im linearen Bereich des Druckaufbaus bis zum Übergang vom Druckaufbau zum Druckabbau, wobei der Regler immer dann ein anderes Signal anstelle der druckkompensierten Temperatur T* erhält, wenn

(I) Absolutwert $dT^*/dt > 1$ Kelvin/min oder
(II) Absolutwert $(p-p^*)$ größer als die durch Produktentleerung bedingten Druckänderungen ist.

Dabei ist $T^*(t)$ die druckkompensierte Temperatur zum Zeitpunkt t, ${}_\Delta T$ ist ein konstanter, zeitunabhängiger allgemeiner Korrekturwert, der für jede Apparatur einmal durch Anpassung festgelegt wird und in der Regel zwischen 0,01 und 2 Kelvin liegt. T(t) ist die am Reaktor mit einem Temperatursensor gemessene Temperatur zum Zeitpunkt t, p(t) der zum Zeitpunkt t gemessene Druck, vorzugsweise in der örtlichen Nähe der Temperaturmeßstelle, $p^*(t)$ der bis zum Zeitpunkt t zeitlich gemittelte Druck an der Druckmeßstelle, b ist ein von der chemischen Zusammensetzung der Substanzen im Reaktor abhängiger Koeffizient, der für den Reaktor und das vorgegebene Stoffsystem vor Beginn der Regelung durch die folgenden Schritte einmal experimentell bestimmt wird:

- Messung von Druck und Temperatur über der Zeit
- Bildung des Druck-Temperatur-Diagramms durch Elimination der Zeit
- b ist die Steigung im Linear-Bereich des Druckaufbaus des Diagramms.

b) Glättung dieses Temperatur signals $T^*(t)$ nach bekannten Verfahren.

c) Verwendung dieses geglätteten Signals als Regelgröße für die Nachstellung der Kühlwassereintrittstemperatur und/oder Kühlwassermenge, so daß die Reaktortemperatur T auf dem voreingestellten Sollwert gehalten wird.

Der Begriff "druckkompensierte Temperatur" wird durch die Vorschrift (i) definiert. Die Regelung kann sowohl für einen einzelnen Reaktor wie auch für einige oder bevortugt alle Reaktoren einer Kaskade eingesetzt werden. Als Regler kommen sowohl analoge oder digitale PID-Regler oder andere Verfahren der Regelungstechnik, wie z.B. adaptive Regler, in Frage.

Das erfindungsgemäße Verfahren setzt in der Regel nach einer gewissen Anfahrtzeit der Anlage ein. Bis dahin wurde in geeigneten Intervallen - z.B. 15-Sekunden-Abständen - Druck und Temperatur örtlich nahe beieinander am Reaktor gemessen. Aus den Druck-Werten bildet man zu Beginn der Regelung den arithmetischen Mittelwert $p^*(t1)$, wobei t1 den Zeitpunkt bezeichnet, bei dem die erfindungsgemäße Regelung einsetzt. Bei der Mittelwertbildung und Nachführung des Druckes werden bevorzugt nur die Drücke berücksichtigt, die in dem durch das Entleerungssystem am Ende des Autoklavsystems bedingten Druckschwahkungsbereich liegen. Es hat sich als besonders vorteilhaft herausgestellt, bei der Mittelwertbildung Druckschwankungen bedingt durch Freispülen von Rohrleitungen, Absehkungen wegen Kompressorausfall usw. nicht mit zu berücksichtigen. Für die kontinuierliche Bestimmung der druckkompensierten Temperatur T* muß einmal - vor Beginn der Regelung - der stoff- und systemabhängige Koeffizient b bestimmt werden. Dazu werden an dem bestehenden Reaktorsystem mit in der Regel variierenden Drükken und dadurch variierenden Temperaturen beim Betrieb über eine Zeit von wenigstens 1 Meßintervall Temperatur und Druck zeitabhängig gemessen und die Größen Druck und Temperatur durch Elimination der Zeitvariablen gegenseitig aufgetragen. b wird als Steigung im Linearbereich des Druckaufbaus der Druck-Temperatur-Kurve bestimmt.

Bevorzugt wird die Temperatur am Reaktoraustritt gemessen. Denkbar sind allerdings alle für den vorgegebenen Reaktor möglichen Stellen. Der zu dieser Temperatur physikalisch gehörende Druck ist derjenige Druck, den die Polymermasse in der Nähe der Temperaturmeßstelle hat. Aus diesem Grunde werden die für die Regelung notwendigen Reaktionsdrücke $p(t)$ und Temperaturen $T(t)$ bevorzugt örtlich benachbart gemessen.

Bevorzugt wird das erfindungsgemäße Regelsystem eingeschaltet, wenn der Absolutwert der zeitlichen Ableitung der druckkompensierten Temperatur mit der Zeit kleiner als 0,25 Kelvin/Minute wird. Weiterhin wird das Verfahren bevorzugt eingesetzt, wenn die Druckunterschiede zwischen dem zeitlich gemittelten Druck $p^*(t)$ und $p(t)$ nicht größer als 70 bar, bevorzugt nicht größer als 50 bar sind. Bei Druckschwankungen, die durch die Entspannung eines Reaktors zum Leerspülen von Rohrleitungen entstehen, sowie bei Druckstörungen, wie z.B. Kompressorausfall, wird für die Zeit dieser Störung der aus den bisherigen druckkompensierten Temperaturänderungen abgeleitete Prozeßtrend fortgeführt und die erfindungsgemäße Regelung nach Vorschrift (i) ausgesetzt.

Entsprechend einer Variante des erfindungsgemäßen Verfahrens kann das Regelsystem auch nur dann eingeschaltet werden, wenn der aktuelle Druck $p(t)$ in einem Bereich während des Druckaufbaus liegt, dessen obere Grenze der letzte aktuelle Wert des Druckes während des Druckaufbaus bildet und dessen Größe 90 %, bevorzugt 70 %, der Amplitude der durch das intermittierende Entspannungssystem verursachten Druckschwankungen beträgt.

Als Stellgröße können sowohl die Kühlwassermenge wie auch die Kühlwassereintrittstemperatur wie auch beides gleichzeitig verwendet werden. Bevorzugte Stellgröße ist die Kühlwassereintrittstemperatur.

Außerhalb des Gültigkeitsbereiches (i) können dem Regler nach dem Stand der Technik übliche Vorschriften mitgeteilt werden.

Bevorzugt wird die Regelung nach Beschreibung a) noch durch die Zusatzmaßnahme unterstützt, daß man

a) die druckkompensierte Temperatur nach (i) einführt,

a') im Falle der zeitlich begrenzten Nichtgültigkeit von Regelbedingung (i)

(ii)     $T^*(t) = T^*(t-1) + c(t-1)$ definiert,

wobei $c(t-1)$ ein Koeffizient ist, der durch Mittelung aus den Zeitänderungen vorangegangener Temperaturen $T^*(t-i)$ $(i>o)$ gebildet wird und zum Startpunkt der Reaktion beliebig zwischen -0,7 und +0,7 Kelvin/Minute ausgewählt werden kann, und $T^*(t-1)$ die zuletzt entweder über (i) oder nach (ii) definierte drückkompensierte Temperatur zum Zeitpunkt t-1 ist. Der Zeitpunkt t-1 bedeutet den Zeitpunkt, bei dem die letzte Messung von T und p vor der jetzt aktuellen Messung zum Zeitpunkt t vorliegt.

Besonders bevorzugt läuft das erfindungsgemäße Regelverfahren ab, wenn für den Übergang der Regelbedingungen von a') nach a) noch die folgende Maßnahme berücksichtigt wird:
Falls zu einem Zeitpunkt $t' = t-1$ $T^*$ nach Formel (ii) bestimmt wurde, wird b beim nächsten Einschalten von Formel (i) zum Zeitpunkt t nach der Vorschrift

(iii)     $b(neu) = b(alt)-dx(T^*(t')-T^*(b(alt),t))/(p(t)-p^*(t)-)$

geändert und bis zur erneuten Änderung nach dieser Vorschrift für den späteren Zeitpunkt der Gültigkeit von (i) beibehalten, wobei d ein Dampfungsfaktor zwischen 0,00001 und 1 ist, der beliebig gewählt werden kann.

Die Glättung b) des zeitabhängigen Signals $T^*(t)$, bestimmt nach den Vorschriften (i) bis (iii), kann nach beliebigen, bekannten mathematischen Verfahren erfolgen, insbesondere nach dem Verfahren der exponentiellen Glättung.

Die Methode benutzt zur Ermittlung der Steigung der Temperatur einen rekursiven Algorithmus, in dem die Steigungsgerade unter Anwendung des Gauß'schen Gesetzes der kleinsten Fehlerquadratmethode ermittelt wird. Im Vergleich zu der bei Regressionsanalysen üblichen gleichen Bewertung der Meßreihenwerte erfolgt bei dieser bevorzugten Methode die Wichtung vorangegangener Werte nach einer geometrischen Reihe. Das bedeutet, daß die zuletzt gemessenen Werte mit einer höheren Wichtung in die Berechnung der zeitlichen Ableitung der Temperatur eingehen als die weiter zurückliegenden Meßwerte. Über einen zusätzlichen Dampfungsfaktor läßt sich einstellen, wie stark die Werte aus der Vergangenheit gewichtet werden sollen.

Das geglättete Signal $T^*$ teilt dem Regler die für die Änderung der Stellgrößen notwendigen Informationen mit. Es kommt dabei wesentlich darauf an, daß der Regler einen Differentialanteil hat. Aus dem geglätteten $T^*$-Signal wird in bekannter Weise - und abgestimmt auf den jeweiligen Reaktor - die Ableitung gebildet, die in den Regelalgorithmus eingeht. Die Ableitung des geglätteten Signals mit der Zeit ist ein Maß für den Prozeßtrend.

Das erfindungsgemäße Verfahren wird bevorzugt verwendet für die Reaktionsführung der Mischpolymerisation von Ethylen und Vinylacetat, hier insbesondere bei Vinylacetat-Gehalten von 20 bis 98 Gew.-%, bei Temperaturen zwischen 30°C bis 150°C und Drücken von 100 bar bis 1000 bar, wobei die mittleren Drücke wenigstens kurzzeitig, bevorzugt im gesamten Reaktionsverlauf, in den Reaktoren bevorzugt nach der von der Stoffzusammensetzung abhängigen Formel $P = 1.1 \times (-204.2 + 9.12 \times (E)/(VA) + 44 \times (E) \times (E)/((VA) \times (VA)) + 1.12 \times T)$ bar gewählt werden, in welcher (E) den Gehalt an copolymerisiertem Ethylen im Endprodukt in Gew.-%, (VA) den Vinylacetat-Gehalt im Endprodukt in Gew.-% und T die Polymerisationstemperatur in °C bedeuten. Weiterhin kann das Verfahren speziell für Ethylen-Vinylacetat-Copolymere dann eingesetzt werden, wenn man bei der Polymerisation 0,02 bis 1,5 Gew.-% Polymerisationsinitiator - bezogen auf eingesetzte copolymerisierbare Monomere - verwendet und der Polymerisationsinitiator eine Zerfallshalbwertzeit bei 70°C von 30 Minuten bis 6 Stunden besitzt und die Polymerisationstemperaturen in den Reaktoren so gewählt werden, daß in der ersten Hälfte des Kaskadenvolumens mindestens 50% des Initiators zerfallen.

Bei den meisten, in der großtechnischen Produktion verwendeten Reaktoren ist das Verhältnis zwischen Reaktoroberfläche und Reaktorvolumen klein. Das bedeutet, daß z.B. ein Temperaturanstieg in der Nähe des Arbeitspunktes zu einer Zunahme der Reaktionswärme führt, die höher ist als die Zunahme der infolge des höheren Temperaturgefälles an das Kühlmedium abgeführten Wärme. Reaktionswärme und abgeführte Wärme stehen demnach nicht mehr im Gleichgewicht. Es folgt hieraus ein weiterer Temperaturanstieg, der zu einer noch größeren Differenz zwischen Reaktionswärme und abgeführter Wärme führt und einen nochmaligen Temperaturanstieg zur Folge hat. Der Arbeitspunkt solcher Reaktoren ist also instabil. Bei der Regelung kommt es deshalb darauf an, Änderungen im Reaktions- und Temperaturverlauf möglichst frühzeitig zu erkennen, damit rechtzeitig gegengesteuert werden kann. Das erfindungsgemäße Regelverfahren liefert einen bedeutenden Beitrag im Hinblick auf die frühzeitige Erkennung einer Reaktionsänderung, bevorzugt für Reaktoren mit instabilen Arbeitspunkten.

Darüber hinaus ermöglicht das erfindungsgemäße Verfahren eine Verbesserung der Produktqualität, da die für den Produktaufbau und die Einheitlichkeit des Produktes störenden Temperaturschwankungen in der Reaktion vermieden werden.

Im folgenden wird die Erfindung anhand von Zeichnungen und Ausführungsbeispielen näher erläutert. Es zeigen:

Fig. 1    ein Verfahrensschema,
Fig. 2    ein Blockschema für das Regelsystem,
Fig. 3    der Reaktordruck p und die Reaktortemperatur T als Funktion der Zeit bei dem Ausführungsbeispiel 1,
Fig. 4    die bei dem Meßvorgang nach Fig. 3 vorherrschende Reaktortemperatur T als Funktion des Reaktordrucks p,
Fig. 5    die im linearen Teil des T(p)-Diagramms von Fig. 4 eingezeichnete Steigerungsgerade,
Fig. 6    für das Ausführungsbeispiel 1 Reaktordruck p, Reaktortemperatur T und die als Regelsignal verwendete geglättete druckkompensierte Temperatur T* als Funktion der Zeit,

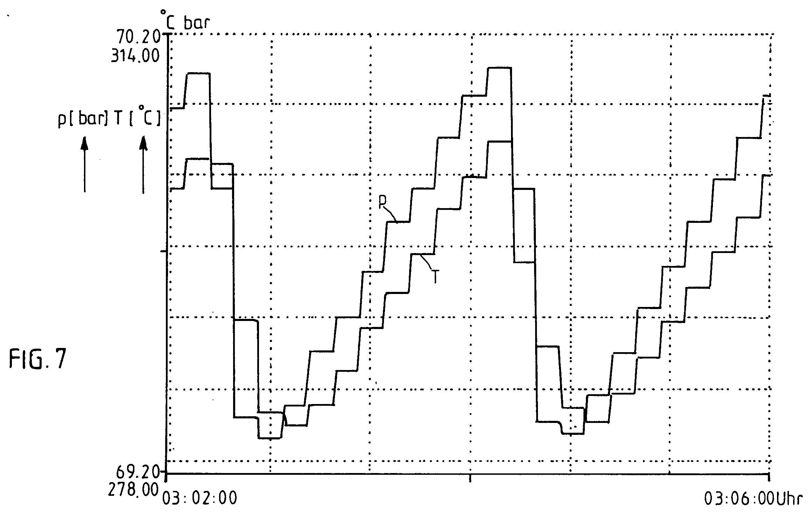

Fig. 7    Reaktordruck p und Reaktortemperatur T als Funktion der Zeit bei dem Ausführungsbeispiel 2,

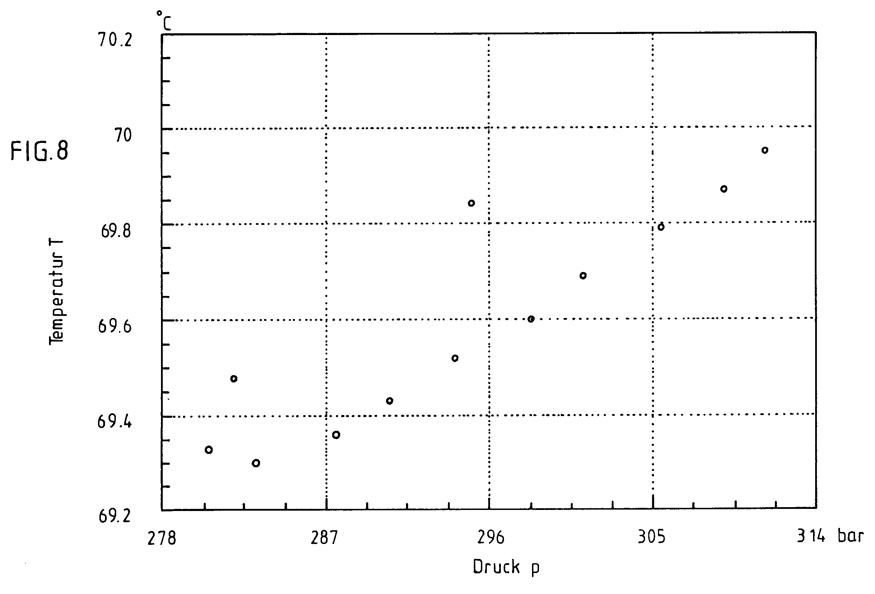

Fig. 8    die aus der Messung gemäß Fig. 7 gewonnene T(p)-Abhängigkeit,

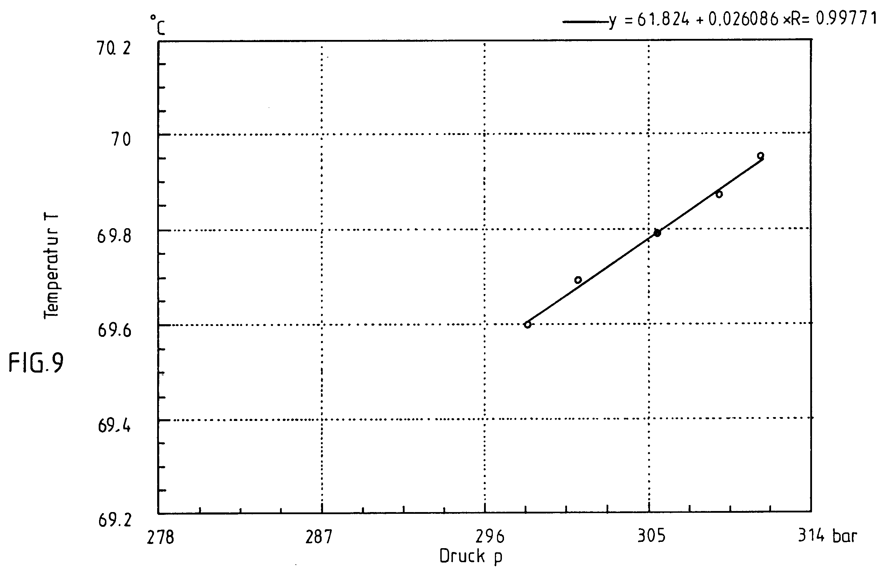

Fig. 9    die im linearen Teil des Diagrammes nach Fig. 8 eingezeichnete Steigerungsgerade und

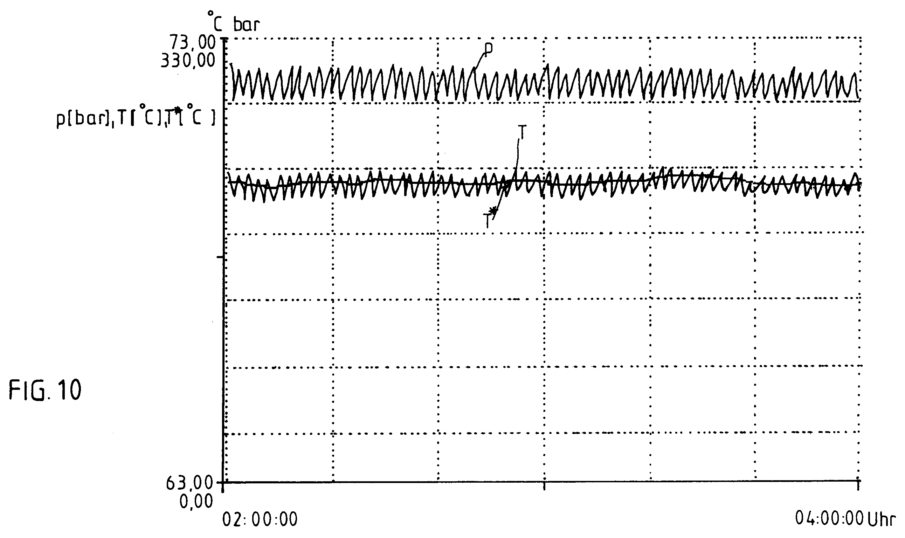

Fig. 10   für das Ausführungsbeispiel 2 der Reaktordruck p, die Reaktortemperatur T und die als Regelsignal verwendete, geglättete druckkompensierte Temperatur T* als Funktion der Zeit.

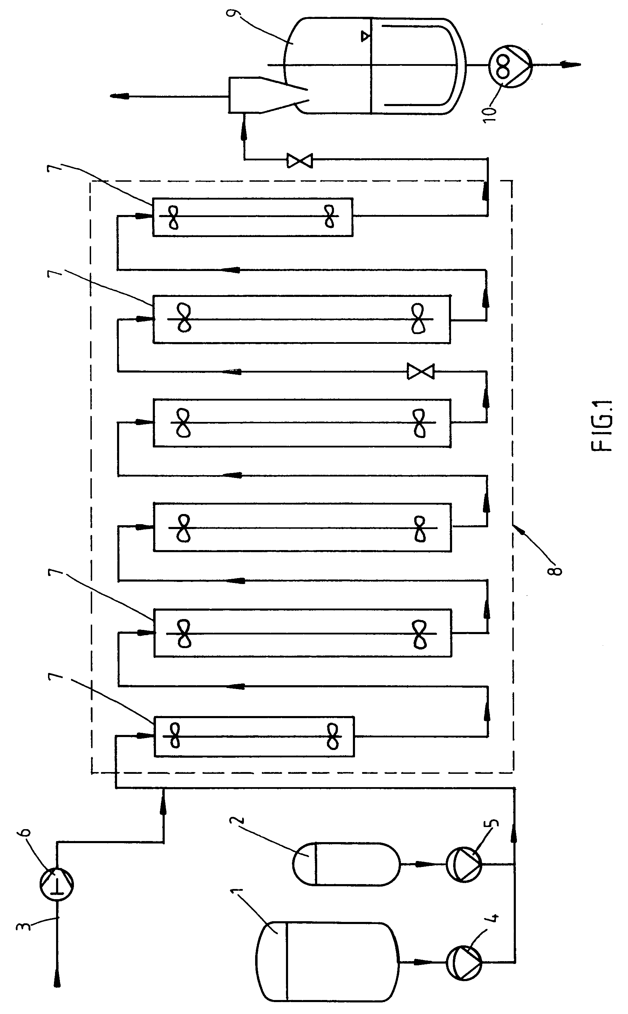

Gemäß Fig. 1 werden die für die Polymerisation erforderlichen Einsatzstoffe (Monomere, Lösungsmittel, Initiator) kontinuierlich aus den Behältern 1, 2 sowie über die Leitung 3 mittels Dosierpumpen 4, 5, 6 in eine aus sechs hintereinandergeschalteten Reaktoren 7 bestehende Reaktorkaskade 8 gefördert. Das entstandene Polymer wird in einem Entspannungsbehälter 9 aufgefangen. Der Entspannungsbehälter 9 wird mittels einer Austragspumpe 10 periodisch intermittierend (taktweise) entleert. Es handelt sich also um ein quasi kontinuierliches Herstellungsverfahren. Die durch die intermittierende Entleerung entstehenden Druckschwankungen pflanzen sich durch die gesamte Reaktorkaskade fort und würden ohne Regelmaßnahmen zu erheblichen Temperaturschwankungen führen. Sämtliche Reaktoren 7 sind daher wassergekühlt. Bei der bisher üblichen konventionellen Temperatregelung können die Mengenströme und/oder die Temperaturen des Kühlwassers nachgestellt werden, um Temperaturerhöhungen entgegenzuwirken. Bisher ist es jedoch nicht gelungen, reaktionsbedingte Temperaturschwankungen in den Reaktoren 7 befriedigend auszuregeln; d.h. die Polymerisationsreaktion betriebsstabil über längere Zeiten bei einer konstanten Temperatur zu fahren.

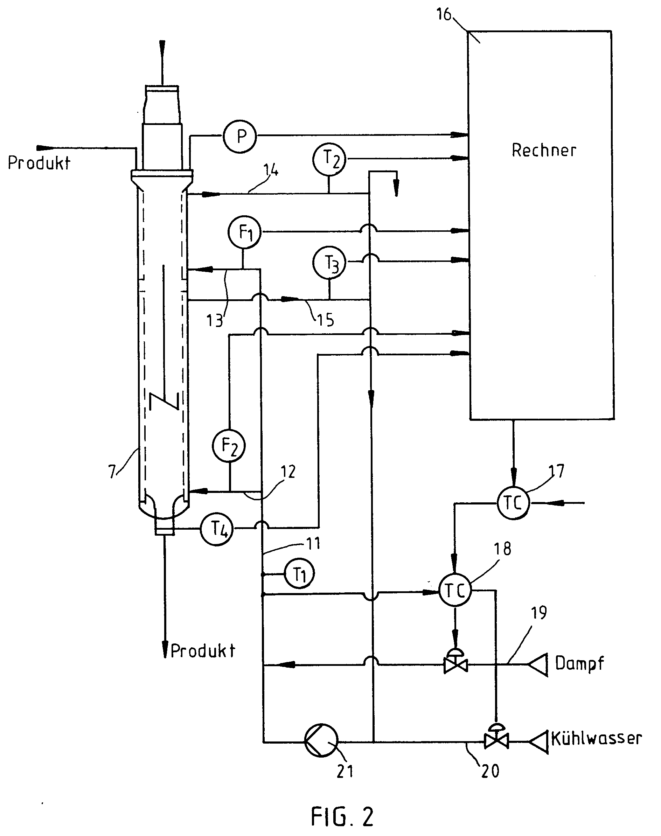

Aus diesen Gründen wird in mindestens einem Reaktor 7 eine spezielle Temperaturregelung verwendet, die anhand der nachfolgenden Figuren im einzelnen erläutert wird. Fig. 2 zeigt den hierfür erforderlichen, mit dem Reaktor 7 in Verbindung stehenden Regelkreis. Mit $F_1$ und $F_2$ sind die Sensoren für die Erfassung der Kühlwassermengenströme, mit $T_1$, $T_2$, $T_3$ die Temperatursensoren für die Kühlwassertemperaturen bezeichnet. $F_1$, $F_2$, $T_1$ beziehen sich dabei auf Kühlwasserzuleitungen 11, 12, 13 und $T_2$, $T_3$ auf Kühlwasserabflußleitungen 14,15.

Die Temperatur im Reaktor wird mit dem Sensor $T_4$ und der Druck mit dem Drucksensor P gemessen. Alle Meßgrößen werden einem Rechner 16 zugeführt, der den nachfolgend beschriebenen Regelalgorithmus bildet und ein für die Reaktortemperatur und den Prozeßtrend charakteristisches Ausgangssignal liefert, das im Regler 17 mit einem voreingestellten Sollwert für die Reaktortemperatur verglichen wird. Bei dem Regler 17 handelt es sich um ein konventionelles Modul mit differentiellem Anteil. Das Ausgangssignal des Reglers 17 steuert über einen Zwischenregler 18 den Mengenstrom für eine Dampfbeheizung 19 der Kühlwasserzuleitungen 12, 13 und/oder den Kühlwassermengenstrom 20 durch diese Leitungen. Ein Teil des Kühlwassers wird mittels der Pumpe 21 im Kreislauf geführt. Der dem Rechner 16 zugrundeliegende spezielle Regelalgorithmus für die Erzeugung des Regelsignals aus den Reaktor-Istwerten wird nachfolgend anhand der Stoffbeispiele 1 und 2 quantitativ beschrieben.

Beispiel 1

Es soll ein Copolymerisat mit einer mittleren Molmasse von 570 000 g/mol und einem Massenanteil von 45 % Vinylacetat hergestellt werden. Die Polymerisation erfolgt in dem Lösungsmittel tertiär-Butanol. Als Initiator wird 2,2'-Azobisisobutylronitril (Handelsname Porophor N) verwendet, dessen Zerfallshalbwertzeit bei 70°C etwa 6 Stunden beträgt. Die Polymerisation soll so gefahren werden, daß das den letzten Reaktor der Kaskade verlassende Produkt einen Feststoffanteil von etwa 47 % besitzt. Die Polymerisation erfolgt gemäß Fig. 1 in sechs hintereinandergeschalteten Reaktoren mit jeweils 4, 6, 6, 6, 6 und 4 m³ Inhalt. In dem sich daraus ergebenden gesamten Kaskadenvolumen von 32 m³ beträgt die mittlere Produktverweilzeit 5,4 Stunden. Der Durchsatz ist etwa 1,2 t Polymer/h. Über ein Entspannungssystem, das zu regelmäßigen Druckschwankungen in den Reaktoren führt, wird der letzte Reaktor der Kaskade in einen Entspannungsbehälter gemäß Fig. 1 entleert. Die Polymerisation soll bei einem mittleren Reaktordruck von 300 bar erfolgen. Dieser Druck ist bis auf die Druckverluste in den Verbindungsleitungen für alle Reaktoren gleich. Die Reaktion soll so geführt werden, daß die mittleren, jeweils am Ausgang der Reaktoren gemessenen Temperaturen 70, 75, 72, 75, 75 und 115°C betragen. Das erfindungsgemäße Verfahren laut Fig. 2 wird gemäß Fig. 1 auf die Reaktoren 2 und 3 angewendet. Die übrigen Reaktoren werden konventionell gefahren. Im folgenden wird die Anwendung des erfindungsgemäßen Verfahrens am Beispiel des Reaktors 3 näher erläutert Dieser Reaktor hat einen Durchmesser von etwa 1 m und eine Höhe von etwa 7,6 m. In diesem Reaktor mit 6 m³ Volumen beträgt die Produktverweilzeit etwa eine Stunde. Die Bestimmung der druckkompensierten Temperatur T* erfolgt aus der am Reaktorausgang aktuell gemessenen Temperatur T und dem "physikalisch" dazugehörenden Druck p, dessen Meßstelle der Temperaturmeßstelle örtlich benachbart ist.

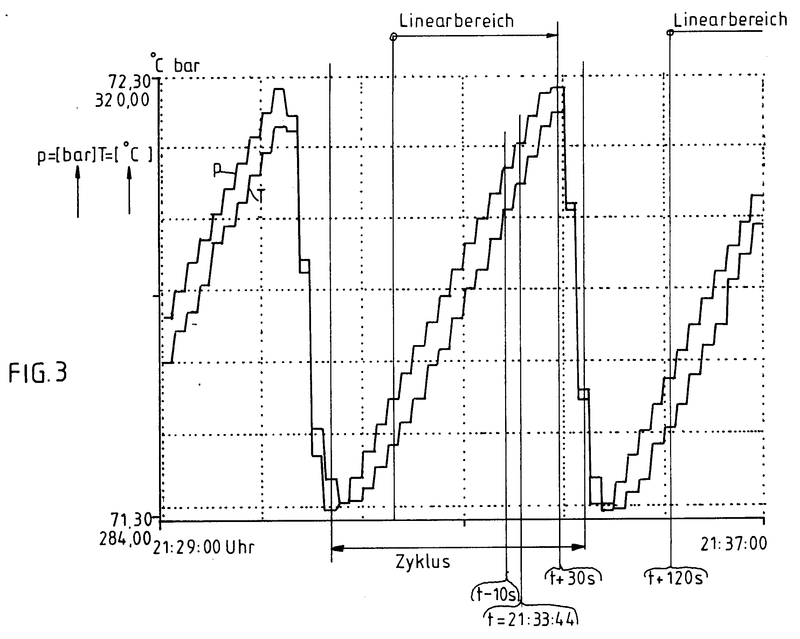

Während der Anfahrzeit wird der mittlere Reaktordruck ermittelt. Dies geschieht durch Bildung des arithmetischen Mittelwertes aus maximalem und minimalem Druck während eines Schwingungszyklus, wobei darauf zu achten ist, daß diese Extremwerte nur aus dem durch das Entleerungssystem bedingten Druckschwankungsbereich bestimmt werden. In Fig. 3 z.B. beträgt während eines Zyklus der maximale Wert 318,96 bar und der minimale Wert 284,36 bar. Dies ergibt einen Startwert für den mittleren Druck von

$$(1) \qquad p^*(t=0) = (284,36+318,96)/2 = 301,66 \text{ bar.}$$

Die Amplitude der Druckschwingung ap ergibt sich zu

$$(2) \qquad ap = 318,96\text{-}284,36 = 34,6 \text{ bar.}$$

Die nachfolgende zeitliche Anpassung des mittleren Druckes an geringfügige Druckänderungen (<10 bar) erfolgt gemäß einer exponentiellen Glättung erster Ordnung nach der Gleichung

$$(3) \qquad p^*(t) = 0,002\text{x}p(t) + (1\text{-}0,002)\text{x}p^*(t\text{-}1),$$

wobei die Anpassung von p*(t) nach dieser Vorschrift nur dann erfolgt, wenn der aktuelle Druck p-(t) im Bereich von p*(t-1)-0.6xap < = p(t)< = p*(t-1)-+0,6xap liegt.
Andernfalls gilt:

$$(4) \qquad p^*(t) = p^*(t\text{-}1).$$

Ist die mittlere Druckänderung größer als 10 bar - z.B. verursacht durch Änderung der Betriebsbedingung - so muß der mittlere Druck p*(t) beginnend mit Gleichung (1) neu bestimmt werden.

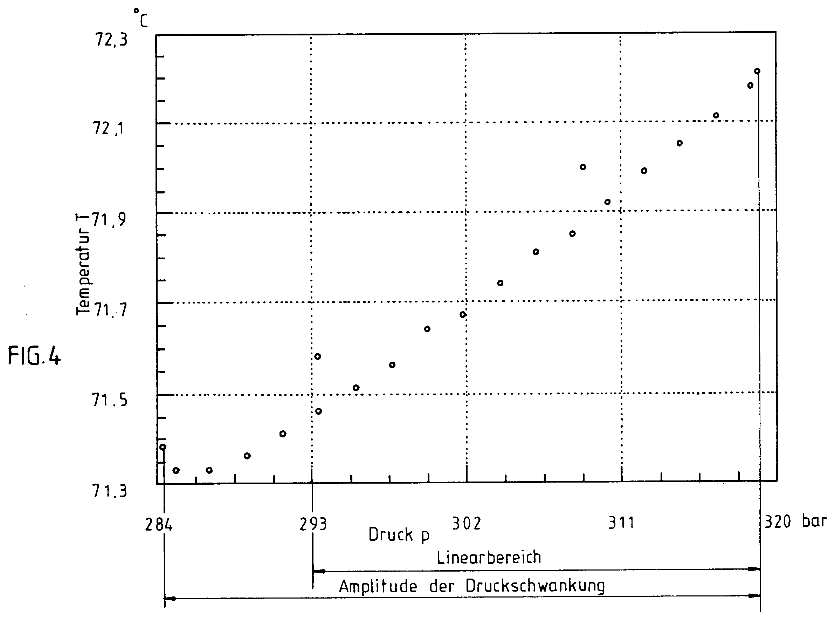

Neben dem mittleren Reaktordruck muß während der Anfahrtzeit der Startwert des Koeffizienten b für das im Reaktor vorliegende Stoffsystem bestimmt werden. In diesem Fall werden die Meßwerte von Druck p(t) und Temperatur T(t) für einen Zyklus - wie in Fig. 3 dargestellt - aufgezeichnet. Durch Elimination der Zeit gelangt man zu dem Diagramm in Fig.4, in dem der Druck auf der Abszisse und die dazugehörende Temperatur auf der Ordinate aufgetragen sind. In dem Diagramm wird ein Linearbereich nach folgender Vorschrift definiert:

- es werden nur die Meßwertpaare während des Druckaufbaus ausgewählt
- der Bereich wird begrenzt nach oben durch das letzte Meßwertpaar während des Druk-kaufbaus, die Größe dieses Bereichs ist 75 % der Amplitude der Druckschwankung.

In dem vorliegenden Beispiel liegt der Linearbereich zwischen po = 318,96 bar und pu = 318,96-0,75x(318,96-284,36) = 293,01 bar.

(5)     Linearbereich also:   293,01   < =   p(t) < = 318,96 bar.

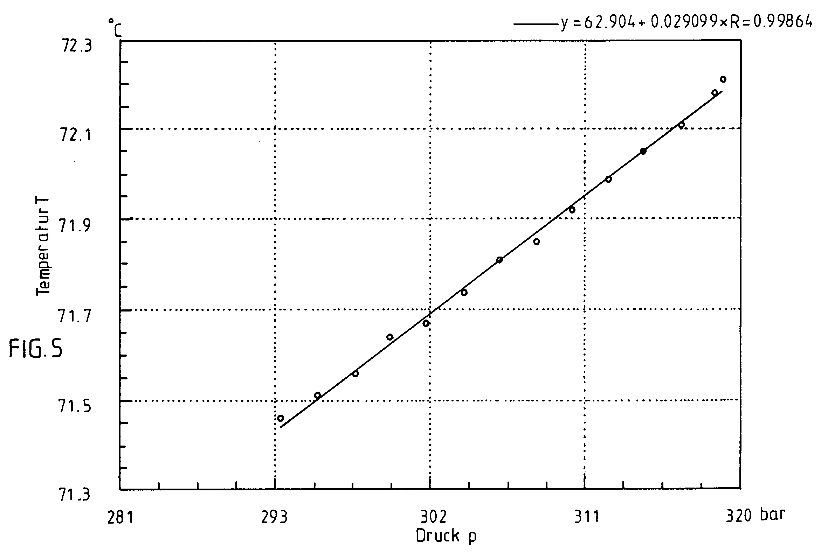

Für die im Linearbereich liegenden Meßwerte wird die Regressionsgerade bestimmt (Fig. 5). Die Steigung der Regressionsgeraden ergibt den Startwert des Koeffizienten b. Im vorliegenden Fall hat b den Wert

(6)     $b = 0,0291$ Kelvin/bar.

Nach Bestimmung des Koeffizienten b wird mit der Bestimmung der druckkompensierten Temperatur T*(t) begonnen nach der folgenden Vorschrift:

(7)     $T^*(t) = T(t) - b \times (p(t)-p^*(t)) + \Delta T$

gültig im Linearbereich nach (5), wobei gleichzeitig im vorliegenden Beispiel gilt:

(i) Absolutwert $dT^*/dt < 0,25$ Kelvin/min und
(ii) $\Delta T = 0,1$ Kelvin

Zum Zeitpunkt t = 21:33:44 Uhr (Fig. 3) wurden die folgenden Werte gemessen:

aktueller Druck p(t) = 314,39 bar, aktuelle Temperatur T(t) = 72,05 ° C.

Dieses Wertepaar liegt im Linearbereich. Somit ergibt sich bei einem mittleren Druck von p*(t) = 310,66 bar:

(8)     $T^*(t) = 72,05-0,0291 \times (314,39-301,66) + 0,1$ = 71,78 bar

Um t-10s = 21:33:34 Uhr (ein Zeitintervall entspricht 10 Sekunden) wurde ermittelt:

T*(t-10s) = 71,77 ° C.
Daraus folgt $dT^*/dt = (71,78-71,77)/10 \times 60 = 0,06$ Kelvin/min. Die Forderung (ii) ist damit erfüllt und es bleibt:
T*(t) = 71,78 ° C.

Die Glättung der Temperaturmeßwerte und die Bestimmung der zeitlichen Ableitung der Temperatur erfolgen nach der Methode der exponentiellen Glättung zweiter Ordnung gemäß folgender Vor-schrift:

(9)     $T^{*(1)}(t) = \alpha \times T^*(t) + (1-\alpha) \times T^{*(1)}(t-1)$

(10)     $T^{*(2)}(t) = \alpha \times T^{*(1)}(t) + (1-\alpha) \times T^{*(2)}(t-1)$

(11)     $C(t) = \alpha(1-\alpha) \times (T^{*(1)}(t)-T^{*(2)}(t))$

wobei

| | |
|---|---|
| $\alpha$ | die Glättungskonstante, |
| $T^{*(1)}$ | das einmal geglättete Temperatursignal, |
| $T^{*(2)}$ | das zweimal geglättete Temperatursi-gnal und |
| c | die zeitliche Ableitung der Temperatur bedeuten. |

Im vorliegenden Fall wird für die Glättungskon-stante

(12)     $\alpha = 0,03$

gewählt.

Um 21:33:34 Uhr lagen die folgenden Rechen-werte vor:
T*(1)(t-10s) = 71,776 ° C
T*(2)(t-10s) = 71,786 ° C
Setzt man diese Werte in die Gleichungen (9) bis (11) unter Berücksichtigung von (12) ein, so ergibt sich:
$T^{*(1)}(t) = 0,03 \times 71,78 + (1-0,03) \times 71,776 = 71,7761 ° C$
$T^{*(2)}(t) = 0,03 \times 71,7761 + (1-0,03) \times 71,786 = 71,7857 ° C$
$c(t) = 0,03/(1-0,03) \times (71,7761-71,7857) = -0,0002502$ Kelvin/10s
c(t) = -0,0015 Kelvin/min (gemittelte zeitliche Ableitung der druckkompensierten Temperatur)
Diese Rechenvorschrift wird weitergeführt bis zum letzten Zeitpunkt des Linearbereichs( = höchster Wert des Druckes während des Druckaufbaus) t + 30s = 21:34:14 Uhr. Zu diesem Zeitpunkt wurden die folgenden Werte gemessen:
p(t + 30s) = 318,96 bar
T(t + 30s) = 72,21 ° C
Als Rechenwerte lagen vor:
p*(t + 30s) = 301,66 bar
T*(t + 30s) = 71,79 ° C
T*(1)(t + 30s) = 71,780 ° C
T*(2)(t + 30s) = 71,783 ° C
c(t + 30s) = -0,0000928 Kelvin/10s
Für die nachfolgenden Zeitpunkte, die nicht im Linearbereich liegen, gilt nun:

(13)     $T^*(t) = T^*(t-1) + c(t-1)$

(14)     $T^{*(1)}(t) = \alpha \times T^*(t) + (1-\alpha) \times T^{*(1)}(t-1)$

(15)     $T^{*(2)}(t) = T^{*(1)}(t) - c(t-1) \times (1-\alpha)/\alpha$

(16)     $c(t) = c(t-1)$

Für den nachfolgenden Zeitpunkt t + 40s = 21:34:24 Uhr (d.h. 10 Sekunden später) ergeben sich dementsprechend die folgenden Zahlenwerte:
$T^*(t+40s) = 71,79 - 0,0000928$ K/10s $\times$ 10s $\approx$ 71,79 °C
$T^{*(1)}(t+40s) = 0,03 \times 71,79 + (1-0,03) \times 71,78 = 71,7803$ °C
$T^{*(2)}(t+40s) = 71,7803 - (-0,0000928$ K/10s $\times$ 10s$)$ $\times (1-0,03)/0,03 = 71,7833$ °C
$c(t+40s) = -0,0000928$ K/10s
Diese Rechnung wird weitergeführt bis zum letzten Zeitpunkt vor Beginn des Linearbereichs. Zu diesem Zeitpunkt t + 110s = 21:35:34 Uhr ergaben sich die folgenden Werte:
$T^*(t+110s) = 71,79$ °C
$T^{*(1)}(t+110s) = 71,7822$ °C
$T^{*(2)}(t+110s) = 71,7852$ °C
Mit Beginn des folgenden Linearbereichs zum Zeitpunkt t + 120s = 21:35:44 Uhr wurden gemessen:
$T(t+120s) = 71,50$ °C
$p(t+120s) = 295,05$ bar
Daraus folgt unter Benutzung der Gleichungen (8) bis (12) und unter Verwendung von p*(t + 120s)- = 301,66 bar:
$T^*(t+120s) = 71,50 - 0,0291 \times (295,05-301,66) + 0,1 = 71,7924$ °C
$T^{*(1)}(t+120s) = 0,03 \times 71,7924 + (1-0,03) \times 71,7822 = 71,7825$ °C
$T^{*(2)}(t+120s) = 0,03 \times 71,7825 + (1-0,03) \times 71,7852 = 71,7851$ °C
$c(t+120s) = 0,03/(1-0,03) \times (71,7825-71,7851) = -0,0000804$ Kelvin/10s
Beim Übergang in den Linearbereich wird der Wert des Koeffizienten nach der folgenden Vorschrift geändert: b(neu) = b(alt) - d $\times$ (T*(t + 110s) - T*-(t + 120s))/(p(t + 120s)-p*(t + 120s))
Im vorliegenden Beispiel wird

(17)     $d = 0,01$

gesetzt.
    Somit ergibt sich:
b(neu) =
$0,0291-0,01 \cdot (71,79-71,7924)/(295,05-301,66)-$ = $0,029096 \approx 0,00291$ Kelvin/bar
b(neu) = b(alt) = 0,0291 Kelvin/bar
bleibt bis zum nächsten Übergang in den Linearbereich bestehen.

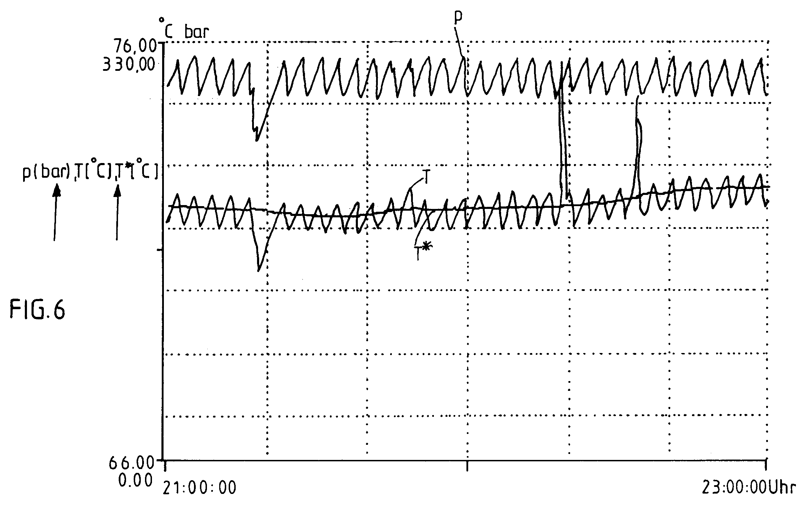

    Die Fig. 6 zeigt über einen längeren Zeitraum den Verlauf von Druck p, Temperatur T und vom ersten geglätteten Wert der druckkompensierten Temperatur $T^{*(1)}$. Der letztgenannte Wert $T^{*(1)}$ wird

dem Regler als Istwert der Regelgröße zugeführt (Fig. 2).

Ergebnis:

    Das Produkt hatte eine deutlich verbesserte Qualität entsprechend den genannten Spezifikationen über den gesamten Zeitverlauf des erfindungsgemäßen Regelverfahrens.

Beispiel 2

    In diesem Beispiel soll ein Copolymerisat mit einer mittleren Molmasse von 210 000 g/mol und einem Massenanteil von 68 % Vinylacetat hergestellt werden.
    Dabei werden wieder tertiär-Butanol als Lösungsmittel und 2,2'-Azobisisobutylronitril als Initiator verwendet. Die Polymerisation ist so zu fahren, daß der Feststoffanteil des den letzten Reaktor der Kaskade verlassenden Produktes 45 % betragen soll. Die Polymerisation erfolgt in vier hintereinandergeschalteten Reaktoren mit jeweils 4, 6, 6 und 4 $m^3$ Inhalt. Dies entspricht einem Kaskadenvolumen von 20 $m^3$. Die mittlere Produktverweilzeit ist 4,3 h. Der Durchsatz beträgt 1,1 t Polymer/h. Es wird dasselbe Entspannungssystem zur Entleerung des letzten Reaktors der Kaskade wie im Beispiel 1 verwendet. Die Polymerisation soll bei einem mittleren Reaktordruck von 295 bar erfolgen. Wie im Beispiel 1 ist dieser Druck bis auf die Druckverluste in den Verbindungsleitungen für alle Reaktoren gleich. Die Reaktion ist so zu führen, daß die mittleren, jeweils am Ausgang der Reaktoren gemessenen Temperaturen 69, 70, 71 und 115 °C betragen. Das erfindungsgemäße Verfahren laut Fig. 2 wird auf den Reaktor 2 angewendet. Dieser Reaktor hat einen Durchmesser von etwa 1 m und eine Höhe von etwa 7,6 m. Das Reaktorvolumen beträgt demnach 6 $m^3$. Die Produktverweilzeit in diesem Reaktor beträgt, ausgehend von den obengenannten Werten, 1,3 h. Wie im Falle des Beispiels 1 erfolgt die Bestimmung der druckkompensierten Temperatur T* aus der am Reaktorausgang aktuell gemessenen Temperatur T und dem "physikalisch" dazugehörenden Druck p, dessen Meßstelle der Temperaturmeßstelle örtlich benachbart ist.
    Die Vorgehensweise in der Berechnung der druckkompensierten Temperatur entspricht der im Beispiel 1, so daß im folgenden nicht mehr alle im Beispiel 1 enthaltenen Gleichungen im einzelnen aufgeführt werden müssen. Es werden nur die wichtigsten Punkte bei der Berechnung der druckkompensierten Temperatur behandelt.
    Zunächst werden die Druck- und Temperaturmeßwerte für einen Schwingungszyklus aufgenommen. Aus dem Druckverlauf werden der mittlere Druck und die Amplitude der Druckschwankung bestimmt. Durch Elimination der Zeit gelangt man zum p-T-Diagramm. Für den Linearbereich wird die Regressionsgerade bestimmt. Die Steigung der Regressionsgeraden ergibt den Wert für den Koeffizienten b. Für die Koeffizienten $\alpha$ und d werden dieselben Werte wie in Beispiel 1 gewählt.

Die Berechnung der druckkompensierten Temperatur T* und der geglätteten Werte $T^{*(1)}$ und $T^{*(2)}$ erfolgt analog zu Beispiel 1. Der Wert $T^{*(1)}$ wird wie im Beispiel 1 als Istwert der Regelgröße dem Regler zugeführt.

Ähnlich wie im Beispiel 1 zeigte sich auch hier, daß das Produkt eine deutlich verbesserte Qualität entsprechend den genannten Spezifikationen über den gesamten Zeitverlauf des erfindungsgemäßen Regelverfahrens aufwies.

**Patentansprüche**

1. Verfahren zur Herstellung von Polymeren, bei dem die Einsatzstoffe kontinuierlich in einen Reaktor oder eine Reaktorkaskade dosiert werden und das entstandene Polymer taktweise intermittierend aus einem nachgeschalteten Entspannungsbehälter ausgetragen wird, wobei sich die durch die Austragung verursachten Druckänderungen in den Reaktor bzw. die Reaktorkaskade fortpflanzen, dadurch gekennzeichnet, daß die Temperatur in dem Reaktor bzw. in der Reaktorkaskade durch ein Regelsystem mit folgendem Algorithmus konstant gehalten wird:

   a) Einführung einer druckkompensierten Temperatur T* unter Berücksichtigung der aktuellen Anlagen-bedingten Druckänderungen gemäß der Vorschrift

   (i)　　$T^*(t) = T(t) - b(p(t)-p(t)^*) + \Delta T,$

   gültig im linearen Bereich des Druckaufbaus bis zum Übergang vom Druckaufbau zum Druckabbau, wobei der Regler immer dann ein anderes Signal anstelle der druckkompensierten Temperatur (i) erhält, wenn
   (I) Absolutwert $dT^*/dt > 1$ Kelvin/min

   oder
   (II) Absolutwert $(p-p^*)$ größer als die durch Produktentleerung bedingten Druckänderungen, wobei
   $T^*(t)$
   die druckkompensierte Temperatur zum Zeitpunkt t ist,
   $\Delta T$
   ein konstanter, zeitunabhängiger allgemeiner Korrekturwert ist, der für jede Apparatur einmal durch Anpassung festgelegt wird und zwischen 0,01 und 2 Kelvin liegt,
$T(t)$
die am Reaktor mit einem Temperatursensor gemessene Temperatur zum Zeitpunkt t ist,
$p(t)$
der zum Zeitpunkt t gemessene Druck in der Nähe der Temperaturmeßstelle ist,
$p^*(t)$
der bis zum Zeitpunkt t zeitlich gemittelte Druck an der Druckmeßstelle ist,
b
ein von der chemischen Zusammensetzung der Substanzen im Reaktor abhängiger Koeffizient ist, der für den Reaktor und das vorgegebene Stoffsystem vor Beginn der Regelung durch die folgenden Schritte einmal experimentell bestimmt wird:
- Messung von Druck und Temperatur über der Zeit
- Bildung des Druck-Temperatur-Diagramms durch Elimination der Zeit
- b ist die Steigung im Linear-Bereich des Druckaufbaus des Diagramms

   b) Glättung dieses Temperatursignals $T^*(t)$ nach bekannten Verfahren
   c) Verwendung dieses geglätteten Signals als Regelsignal für die Regelgrößen.

2. Verfahren nach Anspruch 1, dadurch gekennzeichnet, daß die Regelung nach Vorschrift (i) durch die Vorschrift
   a') im Falle der zeitlich begrenzten Nichtgültigkeit der Vorschrift (i) wird definiert:

   (ii)　　$T^*(t) = T^*(t-1) + c(t-1)$, wobei:

   $c(t-1)$ ein Koeffizient ist, der durch Mittelung aus den Zeitänderungen vorangegangener Temperaturen $T^*(t-i)$ $(i>0)$ gebildet wird und zum Startpunkt der Reaktion beliebig zwischen -0,7 und +0,7 Kelvin/Minute ausgewählt werden kann, und

   $T^*(t-1)$ die zuletzt entweder über (i) oder nach (ii) definierte druckkompensierte Temperatur zum Zeitpunkt t-1 ist,

   ergänzt wird.

3. Verfahren nach Anspruch 2, wonach die Regelvorschrift zusätzlich durch die Maßnahme:

Falls zu einem Zeitpunkt t' = t-1 T* nach Formel (II) bestimmt wurde, wird b beim nächsten Einschalten von Formel (i) zum Zeitpunkt t nach der Vorschrift

(iii) b(neu) = b(alt) - d x (T*(t')- T*(b(alt),t)) / (p-(t)-p*(t)) geändert und bis zur erneuten Änderung nach dieser Vorschrift für die späteren Zeitpunkte der Gültigkeit von (i) beibehalten, wobei d ein Dämpfungsfaktor zwischen 0,00001 und 1 ist,

ergänzt wird.

4. Verfahren nach Anspruch 1-3, dadurch gekennzeichnet, daß die Reaktoren zur Herstellung von Copolymeren aus Vinylacetat und Ethylen eingesetzt werden.

FIG.1

EP 0 510 478 A1

FIG. 2

FIG.3

Linearbereich

Linearbereich

°C bar

72,30
320,00

p=[bar] T=[°C]

p

T

71,30
284,00  21:29:00 Uhr

Zyklus

21:37:00

(t-10s)

(t+30s)

(t+120s)

t = 21:33:44

EP 0 510 478 A1

FIG.4

14

FIG. 5

EP 0 510 478 A1

FIG.6

FIG. 7

°C bar
70.20
314.00

p [bar] T [°C]

p

T

69.20
278.00 03:02:00                                                03:06:00 Uhr

EP 0 510 478 A1

17

FIG.8

EP 0 510 478 A1

FIG.9

$y = 61.824 + 0.026086 \times R = 0.99771$

Temperatur T (°C)

Druck p (bar)

EP 0 510 478 A1

FIG. 10

EP 0 510 478 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3 815 946 (BAYER)<br><br>----- | | C08F218/08<br>C08F2/00 |

**RECHERCHIERTE SACHGEBIETE (Int. Cl.5)**

C08F

Der vorliegende Recherchenbericht wurde für alle Patentansprüche erstellt

| Recherchenort | Abschlußdatum der Recherche | Prüfer |
|---|---|---|
| DEN HAAG | 30 JULI 1992 | CAUWENBERG C.L. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................................
& : Mitglied der gleichen Patentfamilie, übereinstimmendes
    Dokument